# EUROPEAN PATENT APPLICATION

(11) **EP 3 578 934 A1**
(43) Date of publication of application: **11.12.2019**
(21) Application number: 19172497.0
(22) Date of filing: 03.05.2019
(51) Int. Cl.: G01G 19/414

(54) **PICKING CART AND ASSOCIATED PICKING APPARATUS**

(30) Priority: 04.06.2018 GB 201809109
(71) Applicant: Illinois Tool Works, Inc., Glenview, Illinois 60025 (US)
(72) Inventor: Campbell, Stewart, Glenview, Illinois 60025 (US); Hines, Paul Steven, Glenview, Illinois 60025 (US)
(74) Representative: HGF Limited

(57) **Abstract**

There is provided a picking cart having an information communication device for communicating information relating to an article to be picked and a weighing device for measuring a weight of the article to be picked. The picking cart further has a power distribution system that is configured to power the information communication device by a first battery and the weighing device by the first battery or a second battery. The weighing device is powered by the first battery in preference to the second battery if a charge of the second battery is less than or equal to a first threshold amount.

## Description

### TECHNICAL FIELD

The invention relates to a picking cart. The invention particularly relates to a picking cart for order preparation in a warehouse.

### BACKGROUND

In warehouses and distribution centres, picking carts or trolleys are often used to facilitate order preparation, i.e. the act of assembling a number of different articles or products into a single package for delivery to a customer. Multiple orders may be prepared using a single cart as the cart is moved around a warehouse in which the articles are stored, typically by an operative who picks the articles and prepares each order. Of course, each order will likely differ from one customer to the next, so a difficulty of order preparation is ensuring that each order is prepared correctly.

To prepare each order, the operative is provided with information relating to an article to be picked, e.g. the identity and quantity of the article to be picked. However, the operative is susceptible to making mistakes, including picking the wrong articles, picking too few articles and picking too many articles. Such mistakes may cause incorrect orders being delivered to customers, which, of course, has undesirable consequences, including customer dissatisfaction and wasted stock. Manually checking that each order has been correctly prepared is laborious and time-consuming. Moreover, incorrectly prepared orders, if identified, must be corrected, which requires additional time and effort.

Order checking may be facilitated by weighing the articles as they are picked. A weighing device provided on the cart may be used to check whether the total weight of a number of articles picked corresponds to an expected value. Typically, such weighing devices are electronic balances, so require a source of electrical power. Other devices on the cart may also require electrical power, e.g. the cart may include one or more of a visual display unit, a networking device, a processor, a printer and a scanner. Multiple devices on the cart may be configured to provide one or more of so-called "pick-to-light" and "pick-to-voice" systems.

Of course, having multiple electronic devices on the cart places conflicting demands for electrical power on a power source of the cart, which is typically a battery. The usable time of any device on the cart is limited by the total electrical power available, e.g. the charge of the battery, and the electrical power used by other devices on the cart. However, the useable time of the cart per se is often limited by the usable time of only one or more of the devices on the cart, not all of the devices, e.g. the useable time of a weighing device, which may be required to verify that each picking operation has been conducted correctly, may limit the usable time of the cart.

It is an object of embodiments of the invention to at least mitigate one or more problems associated with known arrangements.

### SUMMARY OF THE INVENTION

According to an aspect of the invention there is provided a picking cart comprising: a first electronic device and a power distribution system configured to power the first electronic device and a second electronic device by a first battery and a second battery, such that the weighing device is powered by the first battery in preference to the second battery if a charge of the second battery is less than or equal to a threshold amount. The arrangement may improve the range of the cart within a warehouse and/or increase the usable time of the cart, compared to known arrangements.

According to a further aspect of the invention there is provided a picking cart comprising: an information communication device for communicating information relating to an article to be picked; a docking station for receiving a weighing device for measuring a weight of the article to be picked; and a power distribution system configured to power the information communication device and the weighing device by a first battery. The weighing device being powerable by the first battery when the weighing device is received by the docking station. Again, the arrangement may improve the range of the cart within a warehouse and/or increase the usable time of the cart, compared to known arrangements. The weighing device may be removed and replaced.

In certain embodiments, the power distribution system may be configured to power the information communication device by a first battery and the weighing device by the first battery or a second battery, such that the weighing device is powered by the first battery in preference to the second battery if a charge of the second battery is less than or equal to a threshold amount. Again, the arrangement may improve the range of the cart within a warehouse and/or increase the usable time of the cart, compared to known arrangements.

According to a further aspect of the invention, there is provided an information communication device for communicating information relating to an article to be picked; a weighing device for measuring a weight of the article to be picked; and a power distribution system configured to power the information communication device by a first battery and the weighing device by the first battery or a second battery, such that the weighing device is powered by the first battery in preference to the second battery if a charge of the second battery is less than or equal to a threshold amount. Again, the arrangement may improve the range of the cart with a warehouse and/or increase the usable time of the cart, compared to known arrangements.

Optionally, the power distribution system may be configured to power the weighing device by the first battery in preference to the second battery if a charge of the first battery is greater than or equal to a threshold amount. Additionally, or alternatively, the power distribution system may be configured to recharge the second battery by the first battery if the charge of the second battery is less than a threshold amount.

In certain embodiments, the picking cart may further comprise the first battery and/or the second battery. Additionally, each of the first battery and/or the second battery may be connectable to the power distribution system. Each of the first battery and/or the second battery may be removable from the picking cart and replaceable by a respective replacement battery. Each of the first battery and/or the second battery may a be primary battery or a secondary battery, i.e. a non-rechargeable battery or a rechargeable battery. In certain embodiments, the second battery may be integral to the weighing device.

The picking cart may further comprise an electric motor configured to at least facilitate movement of the picking cart, such as around a warehouse. Additionally, or alternatively, the power distribution system may be configured to power the electric motor by the first battery. The power distribution system may be configured to power the electric motor only if the charge of the first battery is greater than or equal to a threshold amount.

In certain embodiments, the information communication device may be a visual display unit configurable to display the information relating to an article to be picked. The information communication device may be a networking device configurable to send and/or receive the information relating to an article to be picked.

Optionally, the power distribution system may be connectable to a mains power source and configurable to recharge either the first battery and/or the second battery using the mains power source and/or power the weighing device by the mains power source. The power distribution system may be configurable to power the information communication device, i.e. by the first battery, only if the charge of the first battery is greater than or equal to a threshold amount.

The picking cart may further comprise a processor (central processing unit) configurable to compare a measured weight of one of more of the articles to be picked against a calculated weight equal to the weight of the article to be picked multiplied by quantity of the article to be picked and determine whether the quantity of the article to be picked is present. The power distribution system may be configured to power the processor by the first battery only if the charge of the first battery is at greater than or equal to a threshold amount. In certain embodiments, the picking cart may further comprise a memory configurable to store the information relating to an article to be picked. The power distribution system may be configured to power the memory by the first battery only if the charge of the first battery is at greater than or equal to a threshold amount.

The visual display unit may be configurable to display the calculated weight of the one or more article to be picked. Additionally, or alternatively, the display unit may be configurable to display a positive and/or negative indication in response to the processor determining whether the quantity of the article to be picked is present.

According to a further aspect of the invention, there is provided picking apparatus comprising a picking cart as described above; and a tow vehicle coupleable to the picking cart to tow the picking cart, the towing vehicle having a third battery connectable to the power distribution system, wherein the power distribution system may be configured to recharge either or both of the first and second batteries using a charge of the third battery. Additionally, or alternatively, the power distribution system may be configured to power the weighing device by the third battery. Additionally, or alternatively, the power distribution system may be configured to power the information communication device by the third battery. the arrangement may improve the range of the cart with a warehouse and/or increase the usable time of the cart, compared to known arrangements.

Optionally, the power distribution system may be configured to power the weighing device by the third battery in preference to the first battery and/or the second battery if the charge of the first battery and/or the second battery is less than or equal to a threshold amount. The power distribution system may be configured to power the weighing device by the third battery in preference to the first battery and/or the second battery if a charge of the third battery is greater than or equal to a threshold amount.

In certain embodiments, the power distribution system may be configured to recharge the second battery by the third battery if the charge of the second battery is less than or equal to a threshold amount. Additionally, or alternatively, the power distribution system may be configured to recharge the first battery by the third battery if the charge of the first battery is less than or equal to a threshold amount.

For the avoidance of doubt, features described above in reference to one aspect of the invention may be combined with features of another aspect of the invention.

### BRIEF DESCRIPTION OF THE DRAWINGS

Embodiments of the invention will now be described, by way of example only, with reference to the accompanying figures, in which:
Figure 1 is a schematic representation of a picking cart according to an embodiment of the invention, the picking cart comprising a docking station;
Figure 2 is a schematic representation of a picking cart according to a further embodiment of the invention, the picking cart comprising a docking station and a second battery;
Figure 3 is a schematic representation of a picking cart according to a further embodiment of the invention, the picking cart comprising a second electronic device and a second battery;
Figure 4 is a schematic representation of a picking cart according to a further embodiment of the invention, the picking cart comprising a second electronic device and a second battery integral to the second electronic device;
Figure 5 is a schematic representation of a picking cart according to a further embodiment of the invention, the picking cart comprising an electric motor; and
Figure 6 is a schematic representation of picking apparatus according to a further embodiment of the invention, the picking apparatus comprising a picking cart and a tow vehicle.

### DETAILED DESCRIPTION

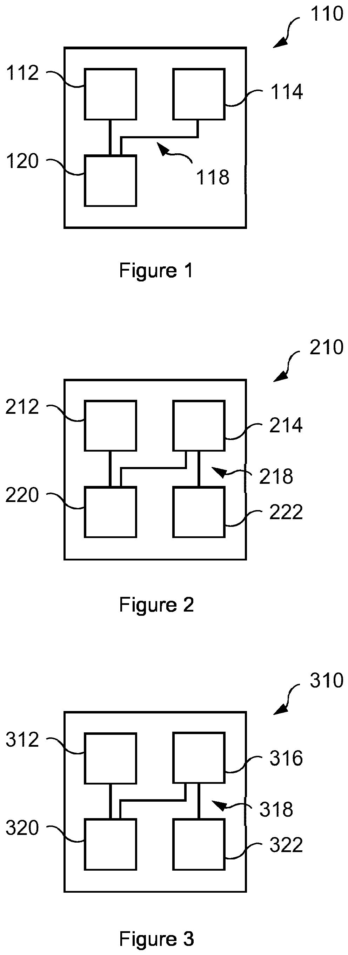

Figure 1 shows picking cart 110 according to an embodiment of the invention. The cart 110 has particular application for order preparation in a warehouse. The cart 110 comprises a first electronic device 112. The first electronic device 112 may be a communication device, e.g. a visual display unit or a networking device. For the avoidance of doubt, a networking device, as used herein, is a piece of networking hardware for communication and/or interaction between multiple devices on a computer network. Examples of networking devices include routers, modems and wireless access points. The cart 110 may further comprise a docking station 114 for receiving a second electronic device (not shown in Figure 1 - see Figures 3 to 6). The second electronic device may be a weighing device, e.g. a dockable weighing device. In alternative embodiments, the second electronic device may be a barcode scanner, a digital camera or other peripheral electronic device.

The cart 110 further comprises a power distribution system 118. The power distribution system 118 may include software and/or hardware that cooperates to manage and/or distribute electrical power on the cart 110. The power distribution system 118 may include one or both of control circuitry and power circuitry. For the avoidance of doubt, the schematic representation of the power distribution system 118 shown in the accompanying figures is non-limiting; the power distribution system 118 may comprise multiple connections between components of the cart 110 as necessary, depending on a desired arrangement of the cart 110.

The power distribution system 118 is configured to power each of the first electronic device 112 and the second electronic device. More specifically, the power distribution system 118 may be configured to power each of the first electronic device 112 and the second electronic device by a first battery 120. Of course, as the skilled reader will understand, the second electronic device may be powered by the first battery 120 only when the second electronic device is received by the docking station 114. The cart 110 may comprise the first battery 120, i.e. the first battery 120 may be an integral battery of the cart 110. However, in certain embodiments, the first battery 120 may be a replaceable battery that is connectable to the power distribution system 118. The first battery 120 may be primary battery or a secondary battery, i.e. non-rechargeable or rechargeable.

In use, the cart 110 may be movable around a warehouse by an operative, whose job it may be to assemble a number of different articles or products into a single package for delivery to a customer. The first electronic device 112 may be configured to communicate information relating to an article to be picked to the operative, in order to facilitate order preparation. The information may include one or more of the identity of the article, the location of the article (e.g. in the warehouse) and the quantity of the article to be picked to complete an order. The information may be displayed to the operative on a visual display unit. Additionally, or alternatively, the information may be provided audibly to the operative via a wireless headset.

Once the article to be picked has been identified, the operative picks the required quantity of the article and may store it on the cart 110 before completing and/or dispatching the order. The second electronic device may be configured to verify an action of the operative, e.g. whether the article has been stored on the cart 110. To this end, the operative may scan a barcode applied to the article to picked using a barcode scanner. In certain embodiments, the second electronic device may be configured to verify whether the correct quantity of the article has been picked. In embodiments where the second electronic device is a weighing device, verifying whether the correct quantity of the article has been picked may be achieved by weighing the total number of the article picked, e.g. by the operative placing the total number of the article picked into a pan of the weighing device.

A measured weight of the total number of the article picked may be determined by the weighing device. The measured weight may be compared to a calculated or expected weight, plus/minus an allowable margin of error, to determine whether the correct quantity of the article has been picked. The comparison may be made manually by the operative, e.g. by reading the measured weight from the visual display unit and comparing the measured weight to the expected weight listed on an order manifest. In certain embodiments, the comparison may be made automatically. To this end, the cart 110 may further comprise a processor (central processing unit) connectable to at least one of the first electronic device 112 and the second electronic device. The processor may be configured to compare the measured weight of one of more of the articles to be picked against the expected weight. The power distribution system 118 may be configured to power the processor by the first battery. In certain embodiments, the cart 110 may further comprise a memory configured to store the information relating to an article to be picked. The power distribution system may be configured to power the memory by the first battery 120.

Figure 2 shows a picking cart 210 according to a further embodiment of the invention. The forgoing description applies to the embodiment shown in Figure 2 and repetition of the description is avoided only for the purpose of brevity. Reference numerals offset by a factor of 100 identify features as described above with reference to Figure 1.

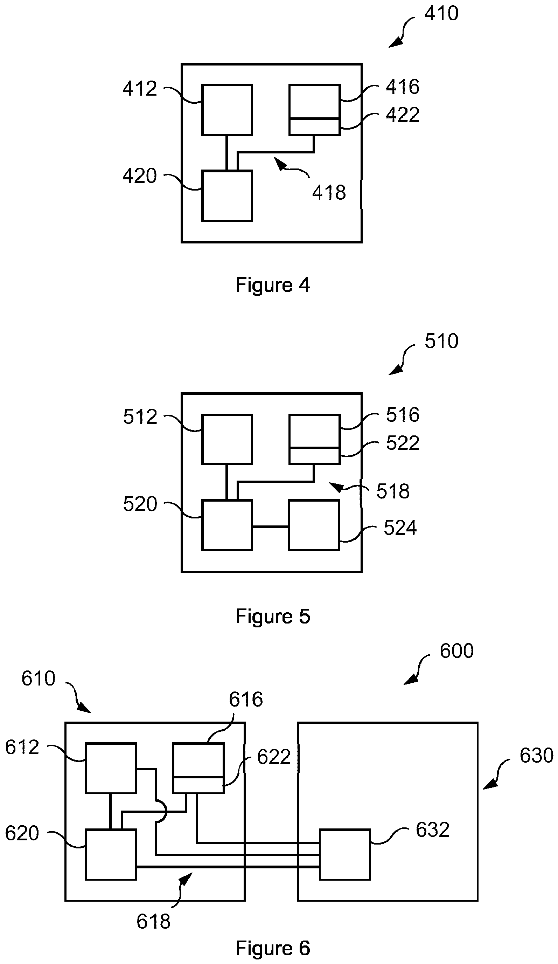

The power distribution system 218 may be configured to power each of the first electronic device 212 and the second electronic device by the first battery 220 and a second battery 222. The second electronic device may be powered by the second battery 222 only when the second electronic device is received by the docking station 214. (However, as described below with reference to Figure 4, the second battery 222 may be integral to the second electronic device. As such, the second electronic device may be powered by the second battery 222 regardless of whether it is received by the docking station 214.) Similarly to the first battery 220, the cart 210 may comprise the second battery 222, i.e. the second battery 222 may be an integral battery of the cart 210. However, in certain embodiments, the second battery 222 may be a replaceable battery that is connectable to the power distribution system 218. Again, similarly to the first battery 220, the second battery 222 may be primary battery or a secondary battery, i.e. non-rechargeable or rechargeable.

The power distribution system 218 may be configured to power the second electronic device by the first battery 220 in preference to the second battery 222. More specifically, in certain embodiments, the power distribution system 218 may be configured to power the second electronic device by the first battery 220 in preference to the second battery 222 if a charge of the second battery 222 is less than or equal to a threshold amount ("a first threshold amount" or "a second threshold amount"). The second battery 222 may be a dedicated battery intended only to power the second electronic device.

The first or second threshold amount may be any amount between 0% and 100%, i.e. between no charge and fully charged. With the first or second threshold amount set at 0%, the second electronic device may be powered by the second battery 222 in preference to the first battery 220 until the second battery 222 is at least substantially depleted, at which point the first battery 220 may power the second electronic device. In this manner, the first battery 220 may serve as a back-up in case the second battery 222 becomes depleted. Alternatively, with the first or second threshold amount set at 100%, the second electronic device may be powered by the first battery 220 in preference to the second battery 222 until the first battery 220 is depleted, at which point the second battery 222 may power the second electronic device. Thus, the second battery 222 may serve as a back-up in case the first battery 220 becomes depleted.

In certain embodiments, the power distribution system 218 may be configured to power the second electronic device by the first battery 220 in preference to second battery 222 if a charge of the first battery 220 is greater than or equal to a further threshold amount ("a third threshold amount"). Thus, the power distribution system 218 may account for the respective charge in either or both of the first and second batteries 220, 222 when powering the second electronic device. The power distribution system 218 may be configured to account for the charge of the first battery 220 in preference to the charge of the second battery 222, or vice versa, when powering the second electronic device.

The third threshold amount may be any amount between 0% and 100%. With the third threshold amount set at 0%, the second electronic device may be powered by the first battery 220 in preference to the second battery until the first battery 220 is depleted, at which point the second battery 222 may power the second electronic device. Thus, again, the second battery 222 may serve as a back-up in case the first battery 220 becomes depleted. With the third threshold amount set at 100%, the second electronic device may be powered by the second battery 222 in preference to the first battery 220 until the second battery 222 is at least substantially depleted, at which point the first battery 220 may power the second electronic device. Again, the first battery 220 may serve as a back-up in case the second battery 222 becomes depleted.

Of course, as described above, each of the first, second and third threshold amounts may be any amount between 0% and 100%. Thus, in certain embodiments, the first or second threshold amount may be set at 20% and the third threshold amount may be set at 60%. In this example, the second electronic device may be powered by the first battery 220 while the first and second batteries 220, 222 are fully charged until the charge of the first battery 220 falls below 60%, at which point the second electronic device may be powered by the second battery. Subsequently, the second electronic device may be powered by the second battery 222 until the charge of the second battery falls below 20%, at which point the second electronic device may be again powered by the first battery. Finally, the second electronic device may be powered by the second battery 222 once the first battery 220 is depleted. In this example, the power distribution system 218 is configured to account for the charge of the second battery 222 in preference to the charge of the first battery 220 when powering the second electronic device.

In addition, or alternatively, to selectively powering the second electronic device, as described above, the power distribution system 218 may be configured recharge either or both of the first and second batteries 220, 222. In certain embodiments, the second battery 222 may be rechargeable by the first battery 220. In certain embodiments, the first battery 220 may by rechargeable by the second battery 222. Moreover, the power distribution system 218 may be configured recharge the second battery 222 by the first battery 220 if the charge of the second battery 222 is less than or equal to a threshold amount ("a fourth threshold amount"). The fourth threshold amount may be any amount between 0% and 100%. Recharging the second battery 222 may extend the usable time of the second electronic device, thus increasing the useable time and/or range of the cart 210.

Figure 3 shows a picking cart 310 according to a further embodiment of the invention. The forgoing description applies to the embodiment shown in Figure 3 and repetition of the description is avoided only for the purpose of brevity. Reference numerals offset by a factor of 100 identify features as described above with reference to Figures 1 and 2. As shown in Figure 3, the cart 310 may comprise the second electronic device 316, e.g. a weighing device. In other words, the second electronic device 316 may be integral to the cart 310.

Figure 4 shows a picking cart 410 according to a further embodiment of the invention. Again, the forgoing description applies to the embodiment shown in Figure 4 and repetition of the description is avoided only for the purpose of brevity. Reference numerals offset by a factor of 100 identify features as described above with reference to Figures 1 to 3. As shown in Figure 4, the second weighing device 416 may comprise the second battery 422. Thus, the second battery 422 may be integral to the second electronic device 416. (The skilled reader will understand that a dockable second electronic device 416, e.g. a dockable weighing device, as discussed with reference to Figures 1 and 2, may comprise the second battery 422.) Thus, the second electronic device 416 may be powered by the second battery 422 when the second electronic device 415 is received by a docking station or otherwise.

Figure 5 shows a picking cart 510 according to a further embodiment of the invention. The forgoing description applies to the embodiment shown in Figure 5 and repetition of the description is avoided only for the purpose of brevity. Reference numerals offset by a factor of 100 identify features as described above with reference to Figures 1 to 4. In certain embodiments, such as that shown in Figure 5, the cart 510 may include an electric motor 524.

The electric motor 524 may at least facilitate movement of the cart 510 around the warehouse. The operative may control movement of the cart 520. Alternatively, the movement of the cart 510 may be autonomous, e.g. controlled by a warehouse management system or similar. In embodiments where the operative controls movement of the cart 510, the operative may walk alongside the cart 510 or may travel on the cart 510. The power distribution system 518 may be configured to selectively power the electric motor 524. More specifically, the power distribution 518 system may be configured to power the electric motor 524 only if the charge of either of the first and second batteries 520, 522 is greater than or equal to a threshold amount ("a fifth threshold amount"). Selectively powering the electric motor may extend the usable time of the second electronic device 516, thus increasing the useable time and/or range of the cart 510.

Additionally, or alternatively, the power distribution system 518 may be configured to selectively power the first electronic device 512 only if the charge of the first battery 520 is greater than or equal to a threshold amount ("a sixth threshold amount"). Thus, power to the first electronic device 512 may denied in order to extend the usable time of the second electronic device 516, thus increasing the useable time and/or range of the cart 510.

Figure 6 shows a picking apparatus 600 according to a further embodiment of the invention. The picking apparatus 600 comprises a picking cart 610 and a tow vehicle 630. The forgoing description applies to the embodiment shown in Figure 6 and repetition of the description is avoided only for the purpose of brevity. Reference numerals offset by a factor of 100 identify features as described above with reference to Figures 1 to 5. The tow vehicle 630 may be couplable to the cart 610 to at least facilitate movement of the cart 610 around the warehouse. The operative may control movement of the tow vehicle 630. Alternatively, the movement of the tow vehicle 630 may be autonomous, e.g. controlled by a warehouse management system or similar. In embodiments where the operative controls movement of the tow vehicle 630, the operative may walk alongside the tow vehicle 630 or may travel on the tow vehicle 630.

The tow vehicle 630 may have a third battery 632 that is connectable to the power distribution system 618. The power distribution system 618 may be configured to power each of the first and the second electronic devices 612, 616 by the first battery 620, the second battery 622 and the third battery 632. (Of course, similarly to above, a dockable second electronic device 616 may be powered by the third battery 632 only when the second electronic device 616 is received by the docking station.) While the tow vehicle 630 may comprise the third battery 632, i.e. the third battery 632 may be an internal battery of the tow vehicle 630, in certain embodiments, the third battery 632 may be a replaceable battery. The third battery 632 may be primary battery or a secondary battery, i.e. non-rechargeable or rechargeable.

The power distribution system 618 may be configured to power the second electronic device 616 by the third battery 632 in preference to either or both of the first and second batteries 620, 622. More specifically, in certain embodiments, the power distribution system 618 may be configured to power the second electronic device 616 by the third battery 632 in preference to either or both of the first and second batteries 620, 622 if a charge of either of the first and second batteries 620, 622 is less than or equal to a threshold amount ("a seventh threshold amount" or "a ninth threshold amount").

The seventh or ninth threshold amounts may be any amount between 0% and 100%, i.e. between no charge and fully charged. With the seventh or ninth threshold amounts set at 0%, the second electronic device 616 may be powered by either of the first and second batteries 620, 622 in preference to the third battery 632 until either or both of the first and second batteries 620, 622 is at least substantially depleted, at which point the third battery 632 may power the second electronic device 616. In this manner, the third battery 632 may serve as a back-up in case either of the first and second batteries 620, 622 becomes depleted. Alternatively, with the seventh or ninth threshold amounts set at 100%, the second electronic device 616 may be powered by the third battery 632 in preference to either or both of the first and second batteries 620, 622 until the third battery 632 is depleted, or disconnected, at which point either of the first and second batteries 620, 622 may power the second electronic device 616.

In certain embodiments, the power distribution system 618 may be configured to power the second electronic 616 device by the third battery 632 in preference to either of both of the first and second batteries 620, 622 if a charge of the third battery 632 is greater than or equal to a further threshold amount ("an eighth threshold amount" or "a tenth threshold amount"). Thus, the power distribution system 618 may account for the respective charge in each of the first, second and third batteries 620, 622, 632 when powering the second electronic device 616. The power distribution system 618 may be configured to account for the charge of either of both of the first and second batteries 620, 622 in preference to the charge of the third battery 632, or vice versa, when powering the second electronic device 616.

The eighth or tenth threshold amounts may be any amount between 0% and 100%. With the eighth or tenth threshold amounts set at 0%, the second electronic device 616 ay be powered by the third battery 632 in preference to either or both of the first and second batteries until the third battery 632 is depleted, or disconnected, at which point either of the first and second batteries 620, 622 may power the second electronic device 616. With the eighth or tenth threshold amounts set at 100%, the second electronic device 616 may be powered by either of the first and second batteries 620, 622 in preference to the third battery 632 until either or both of the first and second batteries 632 is at least substantially depleted, at which point the third battery 632 may power the second electronic device 616. Again, the third battery 632 may serve as a back-up in case either of both of the first and second batteries 620, 622 becomes depleted.

In addition, or alternatively, to selectively powering the second electronic device 616, as described above, the power distribution system 618 may be configured recharge either or both of the first and second batteries 620, 622 by the third battery 632. The power distribution system 618 may be configured recharge the first battery 620 by the third battery 632 if the charge of the first battery 620 is less than or equal to a threshold amount ("an eleventh threshold amount"). The eleventh threshold amount may be any amount between 0% and 100%. Recharging the first battery 620 may extend the usable time of the second electronic device 616, thus increasing the useable time and/or range of the cart 610. Similarly, the power distribution system 618 may be configured recharge the second battery 622 by the third battery 632 if the charge of the second battery 622.is less than or equal to a threshold amount ("a twelfth threshold amount"). The twelfth threshold amount may be any amount between 0% and 100%. Recharging the second battery 622 may extend the usable time of the second electronic device 616, thus increasing the useable time and/or range of the cart 610.

In certain embodiments, the power distribution system 618 may be connectable to a mains power supply. Mains power may be used to power either or both of the first and second electronic devices 612, 616. Mains power may be used to recharge one or more of the first, second and third batteries 620, 622, 632.

Any of the threshold amounts described herein may be fixed, i.e. predetermined, threshold amounts or variable threshold amounts. By allowing the threshold amounts to be predetermined or variable, a warehouse operator and/or a warehouse management system may optimise battery use in a cart, to prolong periods of operation of the cart and/or to maximise operative efficiency. Variable threshold amounts may be varied with a cart in operation, i.e. out on the warehouse floor, to maximise flexibility and/or efficiency of resources available to a warehouse operator and/or a warehouse management system.

All of the features disclosed in this specification (including any accompanying claims and drawings) and/or all of the steps of any method or process so disclosed, may be combined in any combination, except combinations where at least some of such features and/or steps are mutually exclusive.

Each feature disclosed in this specification (including any accompanying claims and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims and drawings) or to any novel one, or any novel combination, of the steps of any method or process so disclosed. The claims should not be construed to cover merely the foregoing embodiments, but also any embodiments which fall within the scope of the claims.

## Claims

1. A picking cart comprising:
an information communication device for communicating information relating to an article to be picked;
a docking station for receiving a weighing device for measuring a weight of the article to be picked; and
a power distribution system configured to power the information communication device and the weighing device by a first battery.

2. A picking cart according to claim 1, wherein the power distribution system is configured to power the weighing device by the first battery or a second battery, such that the weighing device is powered by the first battery in preference to the second battery if a charge of the second battery is less than or equal to a first threshold amount.

3. A picking cart comprising:
an information communication device for communicating information relating to an article to be picked;
a weighing device for measuring a weight of the article to be picked; and
a power distribution system configured to power the information communication device by a first battery and the weighing device by the first battery or a second battery, such that the weighing device is powered by the first battery in preference to the second battery if a charge of the second battery is less than or equal to a second threshold amount.

4. A picking cart according to either of claims 2 and 3, wherein the power distribution system is configured to power the weighing device by the first battery in preference to the second battery if a charge of the first battery is greater than or equal to a third threshold amount.

5. A picking cart according to any of claims 2 to 4, wherein the power distribution system is configured to recharge the second battery by the first battery if the charge of the second battery is less than a fourth threshold amount.

6. A picking cart according to any of claims 2 to 5, further comprising the second battery, the second battery being connectable to the power distribution system.

7. A picking cart according to either of claim 6, wherein the second battery is removable from the picking cart and replaceable by a first replacement battery.

8. A picking cart according to any of claims 2 to 5, wherein the second battery is integral to the weighing device.

9. A picking cart according to any preceding claim, further comprising an electric motor configured to at least facilitate movement of the picking cart, such as around a warehouse, the power distribution system being configured to power the electric motor by the first battery.

10. A picking cart according to claim 9, wherein the power distribution system is configured to power the electric motor only if the charge of the first battery is greater than or equal to a fifth threshold amount.

11. A picking cart according to any preceding claim, wherein the information communication device is a visual display unit configurable to display the information relating to an article to be picked.

12. A picking cart according to any of claims 1 to 10, wherein the information communication device is a networking device configurable to send and/or receive the information relating to an article to be picked.

13. A picking cart according to any of claims 2 to 12, wherein the power distribution system is connectable to a mains power source and configured to recharge either or both of the first and second batteries using the mains power source and/or power the weighing device by the mains power source.

14. A picking cart according to any preceding claim, wherein the power distribution system is configured to power the information communication device only if the charge of the first battery is greater than or equal to a sixth threshold amount.

15. A picking cart according to any preceding claim, further comprising the first battery, the first battery being connectable to the power distribution system.

16. A picking cart according to either of claim 15, wherein the first battery is removable from the picking cart and replaceable by a second replacement battery.

17. A picking cart according to any preceding claim, wherein the power distribution system is connectable to a mains power source and configured to recharge the first battery using the mains power source and/or power the weighing device by the mains power source.

18. Picking apparatus comprising:
a picking cart according to any preceding claim; and
a tow vehicle coupleable to the picking cart to tow the picking cart, the towing vehicle having a third battery connectable to the power distribution system,
wherein the power distribution system is configured to recharge the first battery using a charge of the third battery and/or power the weighing device by the third battery and/or power the information communication device by the third battery.

19. Picking apparatus according to claim 18, wherein the power distribution system is configured to power the weighing device by the third battery in preference to the first battery if the charge of the first battery is less than or equal to a seventh threshold amount.

20. Picking apparatus according to either of claims 18 and 19, wherein the power distribution system is configured to power the weighing device by the third battery in preference to the first battery if a charge of the third battery is greater than or equal to an eighth threshold amount.

21. Picking apparatus comprising:
a picking cart according to any of claims 2 to 17 when dependent on either of claims 2 and 3; and
a tow vehicle coupleable to the picking cart to tow the picking cart, the towing vehicle having a third battery connectable to the power distribution system,
wherein the power distribution system is configured to recharge either or both of the first and second batteries using a charge of the third battery and/or power the weighing device by the third battery and/or power the information communication device by the third battery.

22. Picking apparatus according to claim 21, wherein the power distribution system is configured to power the weighing device by the third battery in preference to the first and second batteries if the charge of either the first and second batteries is less than or equal to a ninth threshold amount.

23. Picking apparatus according to either of claims 21 and 22, wherein the power distribution system is configured to power the weighing device by the third battery in preference to the first and second batteries if a charge of the third battery is greater than or equal to a tenth threshold amount.

24. Picking apparatus according to any of claims 21 to 23, wherein the power distribution system is configured to recharge the second battery by the third battery if the charge of the second battery is less than or equal to an eleventh threshold amount.

25. Picking apparatus according to any of claims 18 to 24, wherein the power distribution system is configured to recharge the first battery by the third battery if the charge of the first battery is less than or equal to a twelfth threshold amount.
